Europäisches Patentamt

European Patent Office

Office européen des brevets

(19)

(11) Numéro de publication **0 089 260 B1**

# (12) FASCICULE DE BREVET EUROPEEN

(45) Date de publication du fascicule du brevet:
10.07.85

(51) Int. Cl.⁴: **C 04 B 40/04, C 04 B 41/63**

(21) Numéro de dépôt: **83400420.2**

(22) Date de dépôt: **02.03.83**

(54) **Produits de cure pour bétons ou mortiers frais, leur procédé de préparation et leur mise en oeuvre pour le traitement des bétons ou mortiers frais.**

(30) Priorité: **09.03.82 FR 8203899**

(43) Date de publication de la demande:
**21.09.83 Bulletin 83/38**

(45) Mention de la délivrance du brevet:
**10.07.85 Bulletin 85/28**

(84) Etats contractants désignés:
**AT BE CH DE FR GB IT LI LU NL SE**

(56) Documents cités:
**DE - A - 2 947 527
DE - B - 1 136 625
FR - A - 2 185 598
US - A - 2 344 578**

(73) Titulaire: **RHONE-POULENC SPECIALITES CHIMIQUES, "Les Miroirs" 18, Avenue d'Alsace, F-92400 Courbevoie (FR)**

(72) Inventeur: **Arpin, René, 29, rue du Commandant Faurax, F-69006 Lyon (FR)**

(74) Mandataire: **Fabre, Madeleine-France et al, RHONE-POULENC RECHERCHES Service Brevets Chimie et Polymères 25, quai Paul Doumer, F-92408 Courbevoie Cedex (FR)**

BUNDESDRUCKEREI BERLIN

## Description

La présente invention a pour objet des produits de cure pour bétons ou mortiers frais, lesdits produits de cure contenant une dispersion aqueuse d'un polymère synthétique filmogène, en particulier d'un copolymère styrène-butadiène filmogène, leur procédé de préparation et leur mise en œuvre par le traitement de bétons ou mortiers frais.

Les bétons ou mortiers frais doivent être protégés un certain temps après leur gâchage afin d'éviter une trop grande évaporation de l'eau qu'ils contiennent. En effet un départ trop important d'eau peut entraîner une hydratation incomplète du béton ou mortier avec baisse des résistances mécaniques, un retrait trop important avant prise créant des fissures etc.

Un moyen de maintenir l'eau dans les bétons ou mortiers consiste à pulvériser sur les matériaux frais un produit de cure formant après application un film continu imperméable s'éliminant par pelage ou brossage, de manière à permettre l'application ultérieure d'une peinture.

Les produits de cure usuellement utilisés sont à base de:

— résines, cires ou paraffines en émulsion aqueuse,
— résines en émulsion aqueuse et d'huiles faiblement visqueuses (DE-A-2 947 527),
— résines naturelles ou synthétiques, cires ou paraffines dissoutes dans des solvants pétroliers,
— caoutchouc chloré.

Il a été constaté que ces produits usuels présentent des inconvénients concernant leur élimination ou des problèmes d'hygiène. Les produits en solution organiques sont généralement efficaces contre la dessication mais présentent des risques d'inhalation des vapeurs de solvant par les manipulateurs; ils sont en outre difficiles à éliminer. Les émulsions aqueuses de résines pénètrent dans la couche superficielle des bétons ou mortiers et donnent un film adhérant au support, film qui de ce fait est très difficile à éliminer. Les émulsions aqueuses de cire sont également difficiles à éliminer par pelage ou brossage.

Il a été proposé (demande française publiée sous le n° 2 185 598) de durcir le ciment frais par mise en place séparée sur la surface exposée d'un mélange d'une émulsion bitumineuse et d'un latex de caoutchouc naturel ou synthétique en quantité plus faible et d'un coagulant chimique de la composition de manière à former avec rejet d'eau une membrane permanente imperméable.

Il est également connu pour traiter le béton frais de former à sa surface une couche plastique pelable par application d'une émulsion d'une résine du type polyacétate de vinyle additionnée d'un agent d'exsudation et d'un additif d'antiadhérence pénétrant dans les pores et empêchant ainsi l'adhérence du film plastique (DE-B-1 136 625).

La demanderesse a trouvé des produits de cure en milieu aqueux particulièrement performant, en ce qui concerne l'imperméabilité apportée aux bétons ou mortiers frais, et s'éliminant très facilement par pelage.

Les produits de cure faisant l'objet de l'invention sont caractérisés en ce qu'ils contiennent:

— une dispersion aqueuse A l'un polymère synthétique filmogène peu ou pas perméable à la vapeur d'eau et compatible avec les bétons ou mortiers frais;
— en mélange avec au moins un agent coagulant dudit polymère synthétique filmogène en présence d'ions calcium, ledit agent coagulant étant introduit sous forme d'une solution aqueuse ou hydroalcoolique ou par l'intermédiaire d'une émulsion aqueuse de cire et/ou d'une dispersion aqueuse B d'un polymère synthétique peu ou pas perméable à la vapeur d'eau, ladite dispersion aqueuse B ayant été préparée par polymérisation en présence dudit agent coagulant.

Les termes »compatibles avec les bétons ou mortiers« signifient que le polymère synthétique de la dispersion aqueuse A ne contient pas de colloïdes protecteurs insolubles dans l'eau, à pH très alcalin (12 par exemple) et/ou en présence d'ions calcium, et peut diffuser superficiellement dans les bétons ou mortiers.

On considère qu'un polymère synthétique est peu perméable à la vapeur d'eau lorsqu'il présente une perméabilité à la vapeur d'eau inférieure à 5 $g/m^2/24$ h/mm à 25°C, selon la norme ASTME 96 635.

Comme dispersions aqueuses A de polymère synthétique sont utilisées les dispersions aqueuses de copolymères styrène-butadiène à au moins 50% en poids de styrène préparées selon les procédés classiques de polymérisation en émulsion aqueuse en milieu acide en présence d'un mélange d'agents émulsifiants anioniques stables en milieu acide et non ioniques.

Les quantités de butadiène présentes dans lesdits copolymères sont choisies de telle manière que les dispersions aqueuses A de copolymères soient filmogènes à la température d'application et de séchage dudit produit de cure, c'est-à-dire aussi bien à 0°C qu'à plus de 40°C.

La dispersion aqueuse A de copolymère styrène-butadiène pourra contenir de 40 à 55% en poids de matière sèche constituée de copolymère styrène-butadiène présentant un rapport pondéral styrène/butadiène compris entre 50/50 et 65/35, et de préférence de 54/46 à 62/38, avec un diamètre moyen de particules compris entre 0,1 et 0,2 μm.

Comme agents émulsifiants anioniques et non-ioniques pouvant être mis en oeuvre, on peut citer à titre d'exemple: les alkylsulfates, les alkylsulfonates, les arylsulfates, les arylsulfonates, les alkylaryl-sulfates, les alkylarylsulfonates, les sulfosuccinates, les alkylphosphates de métaux alcalins, les alcools gras polyéthoxylés, les alkylphénols polyéthoxylés, les acides gras polyéthoxylés etc.

On dénommera ci-après par »agent coagulant« tout agent coagulant du polymère synthétique filmogène en présence d'ions calcium.

Les »agents coagulants« mis en oeuvre pour réaliser l'invention sont des tensio-actifs ou des colloïdes protecteurs insolubles dans l'eau en présence d'ions calcium.

On peut citer à titre d'exemple »d'agent coagulant« les sels alcalins d'acides aliphatiques saturés ou insaturés contenant de 8 à 18 atomes de carbone et de préférence de 12 à 18 atomes de carbone. On pourra utiliser à titre préférentiel l'oléate ou le laurate de potassium, sodium ou lithium et en particulier le laurate ou l'oléate de potassium.

Lesdits »agents coagulants« sont introduits en solution aqueuse ou hydroalcoolique, ou par l'intermédiaire d'une émulsion aqueuse de cire et/ou d'une dispersion aqueuse B d'un polymère synthétique peu ou pas perméable à la vapeur d'eau.

On peut citer comme exemple de cires pouvant être mises en oeuvre sous forme d'émulsion aqueuse selon l'objet de l'invention: les cires de polyéthylène, les cires paraffiniques d'origine pétrolière, les cires microcristallines saturées d'origine pétrolière, les cires contenant de la cire de Montan ... présentant un point de fusion relativement élevé, c'est-à-dire ne »fondant« pas au niveau du film exposé au soleil.

On choisira en particulier celles présentant un point de fusion de préférence supérieur à 50°C et inférieur à 100°C (ce afin de faciliter l'opération de dispersion dans l'eau chaude des particules de cire).

La mise en émulsion dans l'eau desdites cires peut être réalisée par mélange de la cire choisie à l'état fondu avec »l'agent coagulant« ci-dessus défini éventuellement additionné d'un émulsifiant anionique, non-ionique et/ou cationique, puis incorporation dudit mélange, après homogénéisation dans l'eau.

L'incorporation dudit mélange peut être réalisée lentement dans de l'eau portée à une température généralement comprise entre 50 et 90°C et au moins égale à la température de fusion de la cire.

L'émulsion aqueuse de cire ainsi obtenue pourra contenir de 10 à 55% en poids de matière sèche constituée de particules dont le diamètre moyen est généralement inférieur à 1 μm.

Parmi les dispersions aqueuses B de polymère synthétique peu ou pas perméable à la vapeur d'eau pouvant servir de support pour la mise en oeuvre de l'»agent coagulant«, on peut citer les dispersions de copolymères butadiène-styrène à plus de 20% de butadiène préparées selon les procédés classiques de polymérisation en émulsion aqueuse en présence de l'»agent coagulant« éventuellement additionné d'un agent émulsifiant anionique et/ou non-ionique.

La dispersion aqueuse B de copolymère butadiène-styrène pourra contenir de 40 à 55% en poids de matière sèche constituée de copolymère butadiène/styrène présentant un rapport pondéral butadiène/styrène compris entre 95/5, et 20/80, et de préférence de 90/10 à 35/65, avec un diamètre moyen de particules compris entre 0,1 et 0,3 μm.

Les produits de cure faisant l'objet de l'invention, contiennent favorablement les quantités suivantes de constituants, les quantités de chaque constituant, à l'exclusion de la cire, étant exprimées en % en poids par rapport au poid de produit de cure:

— de 30 à 99,5%, de préférence de 45 à 85%, de dispersion aqueuse A de polymère synthétique filmogène,
— d'au moins 0,1%, de préférence de 0,3 à 0,8% d'»agent coagulant«,
— de 0 à 69,9%, de préférence de 15 à 45% de dispersion aqueuse B de polymère synthétique
— et de 0 à 20%, de préférence de 1 à 4%, de cire, la quantité de cire étant experimée en poids de matière sèche de cire par rapport au poids total de matière sèche de polymère contenu dans lesdits produits de cure (c'est-à-dire par rapport au poids total de matière sèche de polymère contenu dans les dispersions aqueuses A et B).

Les produits de cure faisant l'objet de l'invention peuvent également contenir des charges fines telles que des pigments permettant de repérer les surfaces de bétons ou mortiers traitées et de réfléchir une partie des rayons lumineux au niveau de la pellicule formée par application du produit de cure, ce qui évite le surchauffement de la surface des bétons ou mortiers; on peut citer comme exemple de pigments l'oxyde de titane, les silicoaluminates de sodium amorphes etc. ... Lesdits pigments peuvent être utilisés en quantité de 0,5 à 5% en poids par rapport au poids de produit de cure. On peut également mettre en oeuvre des produits antigels (diéthylène-glycol, 1—2 propane diol en quantité comprise entre 2 et 8% du poids de produit de cure), ce afin d'obtenir des compositions de point de congélation inférieur et reversibles au gel.

La présente invention vise également le procédé de préparation des produits de cure ci-dessus décrits. Ledit procédé consiste à mélanger, en respectant les proportions ci-dessus indiquées des divers constituants, la dispersion aqueuse A de polymère synthétique filmogène, et l'»agent coagu-

**0 089 260**

lant« en solution aqueuse ou hydroalcoolique et/ou l'émulsion aqueuse de cire et/ou dispersion aqueuse B de polymère synthétique contenant l'»agent coagulant« et éventuellement les charges fines diverses ou des produits antigels.

La présente invention a également pour objet l'utilisation desdits produits de cure ci-dessus décrits pour le traitement de bétons ou mortiers frais.

Ledit traitement peut être réalisé d'une manière particulièrement simple par pulvérisation, par exemple au pistolet pneumatique, desdits produits sur le béton ou mortier frais, produits formant après application un film continu imperméable, qui peut être éliminé de la surface traitée au bout de quelques heures par simple pelage.

Les exemples suivants sont donnés à titre indicatif et ne peuvent être considérés comme une limite du domaine et de l'esprit de l'invention.

### Preparation des mortiers

Les mortiers testés sont préparés comme suit:
On effectue à 20°C dans un malaxeur répondant à la norme NF.P 15-411, un mélange:

— de ciment Portland artificiel de classe 55 (selon la norme NF.P 15-301) présentant les caractéristiques suivantes:
  — surface spécifique BLAINE (norme NF.P 15-442) de 3500 $cm^2/g$
  — début de prise sur pâte pure (norme NF.P 15-431) de 2 H 40
    — de sable normal (selon la norme NF.P 15-403)
    — et d'eau.

### Preparation et stockage des eprouvettes a traiter

On utilise deux moules métalliques, dont la caractéristique principale est la profondeur.
Le premier moule présente une profondeur de 1,3 cm et le deuxième une profondeur de 5 cm.
Les deux moules sont remplis de mortier puis pesés et stockés une heure à 20°C et 50% d'humidité relative.
Le produit de cure à tester est ensuite appliqué au pistolet pneumatique sur la surface des mortiers; les moules sont alors placés, après pesée, immédiatement en étuve ventilée à 38°C et 30% d'humidité relative pendant 72 heures (normes ASTM D.C 156-65 et C. 309—58).

### Efficacite du produit de cure

L'imperméabilité apportée par le produit de cure testé peut être appréciée en établissant les rapports suivants:

— eau totale éliminée/eau initiale.

Le début de la mesure (eau initiale) est effectué au début du stockage (c'est-à-dire une heure avant l'application du produit de cure). La mesure de l'eau éliminée s'effectue à la fin du séchage.

— eau nécessaire à l'hydratation/eau initiale.

On estime que l'eau nécessaire à l'hydratation doit correspondre à 25% du poids de ciment mis en oeuvre et en mesurant la quantité d'eau (en gramme) évaporée par $cm^2$ de surface de mortier traitée pendant le séchage (c'est-à-dire pendant 72 heures à 38°C).

### Exemples 1 à 3

Des mesures d'évaporation de l'eau ont été effectuées sur trois types de mortiers, dont la composition est donnée dans le tableau I, lesdits mortiers n'ayant pas été traités par un produit de cure.
Les résultats sont indiqués au tableau I'.

## Exemples 4 à 9

On prépare un produit de cure par mélange de:

a)   70 parties en poids de dispersion aqueuse (dénommée »A«), d'un copolymère styrène-butadiène filmogène présentant les caractéristiques suivantes:
- émulsifiants: alkylsulfonate de sodium et alkylphénoloxyéthyléné
- extrait sec: 50% en poids
- styrène/butadiène en poids: 60/40
- viscosité (Brookfield RVT à 50 t/mn): $75 \pm 25$ mPa · s
- diamètre des particules: $0,16 \pm 0,03$ µm
- tension superficielle: $35 \pm 1$ dynes/cm
- température minimale de formation de film: inférieure à 0° C
- pH: $7 \pm 0,5$

b)   30 parties en poids de dispersion aqueuse (dénommée »B«) d'un copolymère butadiène-styrène polymérisé en présence de laurate de potassium et présentant les caractéristiques suivantes:
- quantité de laurate de potassium: 1,8% en poids
- extrait sec: 50% en poids
- butadiène/styrène en poids: 90/10
- viscosité Brookfield RVT à 50 t/mn: 45 mPa · s
- pH: 12,5
- tension superficielle: 50−55 dynes/cm
- diamètre des particules: 0,15 à 0,3 µm

c)   10 parties en poids d'une émulsion aqueuse de cire à base de cire de Montan, présentant les caractéristiques suivantes:
- quantité de laurate de potassium: 11% en poids par rapport à la cire sèche
- extrait sec: 26,5% en poids
- diamètre des particules: inférieur à 1 µm

La cire mise en oeuvre possède:

- un point de goutte voisin de 80° C
- un indice d'acide de l'ordre de 15−20
- et un indice de saponification d'environ 130−160

Elle est mise en émulsion par mélange avec 11% par rapport à son poids de laurate de potassium en solution aqueuse à 28% en poids, sous légère agitation à 90° C, puis incorporation lente après homogénéisation, dans 333% en poids par rapport à la cire d'eau portée à 90−95° C.

d)   2 Parties en poids d'un silicoaluminate de sodium amorphe synthétique vendu dans le commerce par Rhône-Poulenc sous le nom de ZEOLEX® 24.

Les performances du produit de cure ainsi obtenu sont mesurées sur les trois types de mortiers testés aux exemples 1 à 3, et ce à deux concentrations différentes dudit produit de cure, les concentrations étant exprimées en nombre de g de produit de cure appliqué par m$^2$ de surface traitée.

Les concentrations en produit de cure figurent au tableau I et les résultats des mesures d'imperméabilité au tableau I'.

## Exemple 10

On prépare un produit de cure par mélange de:

a)   99,5 parties en poids de dispersion aqueuse »A« de copolymère styrène-butadiène décrite aux exemples 4 à 9

b)   et 0,5 parties en poids de laurate de potassium sous forme d'une solution hydroalcoolique à 28% en poids de laurate.

**0 089 260**

### Exemple 11

On prépare un produit de cure par mélange de:

a) 89,5 parties en poids de dispersion aqueuse »A« de copolymère styrène-butadiène décrite aux exemples 4 à 9
b) 10 parties de l'émulsion de cire décrite aux exemple 4 à 9, ce qui correspond à environ 0,28 parties en poids de laurate de potassium.
c) et 0,5 parties en poids de laurate de potassium sous forme d'une solution hydroalcoolique à 28% en poids.

### Exemple 12

On prépare un produit de cure par mélange de:

a) 70 parties en poids de dispersion aqueuse »A« de copolymère styrène-butadiène décrite aux exemples 4 à 9
b) 30 parties en poids de dispersion aqueuse »B« de copolymère butadiène-styrène décrite aux exemples 4 à 9, ce qui correspond à 0,27 parties de laurate de potassium
c) et 0,5 parties en poids de laurate de potassium sous forme d'une solution hydroalcoolique à 28% en poids.

### Exemple 13

On prépare un produit de cure par mélange de:

a) 99,5 parties en poids de dispersion aqueuse »A« de copolymère styrène-butadiène décrite aux exemples 4 à 9
b) 0,5 parties en poids d'oléate de potassium sous forme d'une solution hydroalcoolique à 25% en poids d'oléate.

### Exemple 14

On prépare un produit de cure mélange de:

a) 89,5 parties en poids de dispersion aqueuse »A« de copolymère styrène-butadiène décrite aux exemple 4 à 9
b) 10 parties en poids d'une émulsion aqueuse de cire de Montan contenant environ 0,2 parties en poids d'oléate de potassium (ladite émulsion de cire présente environ 20% d'extrait sec et a été préparée à l'aide d'une solution hydroalcoolique d'oléate de potassium à environ 25% en poids d'oléate)
c) et 0,5 parties en poids d'oléate de potassium sous forme d'une solution hydroalcoolique à 25% en poids d'oléate.

Les performances des produits de cure obtenus aux exemple 10 à 12 sont mesurées sur le type de mortier testé à l'exemple 9 et à la concentration en produit de cure utilisée à l'exemple 9 (voir tableau I).
Les résultats des mesures d'imperméabilité figurent au tableau I'.
L'aptitude au pelage après 72 heures des produits de cure préparés aux exemples 4 à 14 est donnée ci-après au tableau II.
On a défini une échelle allant de 1 à 5; la cotation 5 correspond à un produit qui tout en adhérant suffisamment au mortier pour ne pas être éliminé par les intempéries (vent, pluie) est très facilement pelable; la cotation 1 corrspond à un produit difficile à éliminer par pelage.

### Exemple 15

On donne à titre comparatif aux tableau I' et II les résultats de mesure d'imperméabilité et d'aptitude au pelage obtenus en mettant en oeuvre un produit de commerce à base de résines insaturées dérivées du pétrole, en solution dans un mélange d'hydrocarbures aliphatiques et aromatiques lourds.
On constate que l'imperméabilité apportée est bonne mais que la résine s'écaille. Il faut en outre noter les risques d'inhalation des solvants organiques par les manipulateurs lors de la mise en oeuvre du produit.

6

Tableau I

| EX | Poids de produit de cure par unité de surface g/m² | Mortiers (composition) | | Moule profon- deur cm |
|---|---|---|---|---|
| | | ciment/sable en poids | eau/ciment % en poids | |
| 1 | | 1/3 | 48 | 1,3 |
| 2 | | 1/3 | 46 | 5 |
| 3 | | 1/2 | 40 | 5 |
| 4 | 150 | 1/3 | 48 | 1,3 |
| 5 | 300 | 1/3 | 48 | 1,3 |
| 6 | 150 | 1/3 | 46 | 5 |
| 7 | 300 | 1/3 | 46 | 5 |
| 8 | 150 | 1/2 | 40 | 5 |
| 9 | 300 | 1/2 | 40 | 5 |
| 10 | 300 | 1/2 | 40 | 5 |
| 11 | 300 | 1/2 | 40 | 5 |
| 12 | 300 | 1/2 | 40 | 5 |
| 13 | 300 | 1/2 | 40 | 5 |
| 14 | 300 | 1/2 | 40 | 5 |
| 15 | 300 | 1/2 | 40 | 5 |

Tableau I'

| EX | Efficacité du produit de cure | | |
| | eau totale éliminée eau initiale % en poids | eau pour l'hydratation eau initiale % en poids | évaporation g/cm² |
| --- | --- | --- | --- |
| 1 | 60 | 52 | 0,16 |
| 2 | 14,5 | 54 | 0,155 |
| 3 | 15 | 62,5 | 0,176 |
| 4 | 30 | 52 | 0,07 |
| 5 | 26 | 52 | 0,06 |
| 6 | 7,8 | 54 | 0,07 |
| 7 | 6,2 | 54 | 0,06 |
| 8 | 6,2 | 62,5 | 0,058 |
| 9 | 4,4 | 62,5 | 0,04 |
| 10 | 5,9 | 62,5 | 0,06 |
| 11 | 5,0 | 62,5 | 0,05 |
| 12 | 5,0 | 62,5 | 0,05 |
| 13 | 5,9 | 62,5 | 0,06 |
| 14 | 5,0 | 62,5 | 0,05 |
| 15 | 4,4 | 62,5 | 0,04 |

**0 089 260**

Tableau II

| Produit de l'exemple | Aplitude au pelage |
|---|---|
| 4 | 5 |
| 5 | 5 |
| 6 | 5 |
| 7 | 5 |
| 8 | 5 |
| 9 | 5 |
| 10 | 3 |
| 11 | 4 |
| 12 | 4 |
| 13 | 3 |
| 14 | 4 |
| 15 | 1 |
| | s'écaille |

## Revendications

1. Produits de cure pour bétons ou mortiers frais, éliminables par pelage contenant une dispersion aqueuse A d'un copolymère butadiène-styrène filmogène, caractérisés en ce que:

— ladite dispersion A est obtenue par polymérisation en émulsion aqueuse en milieu acide d'un mélange de butadiène et d'au moins 50% en poids de styrène en l'absence de tout colloïde protecteur devenant insoluble dans l'eau en présence d'ions calcium et/ou à pH très alcalin
— est présent en outre dans lesdits produits de cure au moins un »agent coagulant« dudit copolymère de la dispersion A en présence d'ions calcium, ledit agent coagulant étant introduit sous forme d'une solution aqueuse ou hydroalcoolique et/ou par l'intermédiaire d'une émulsion aqueuse de cire et/ou d'une dispersion aqueuse B d'un copolymère butadiène-styrène contenant au moins 20% en poids de butadiène obtenue par polymérisation en émulsion aqueuse en présence dudit »agent coagulant«.

2. Produits selon la revendication 1 caractérisés en ce que la dispersion aqueuse A de polymère synthétique est obtenue par polymérisation en émulsion aqueuse en présence d'un mélange d'agents émulsifiants anioniques stables en milieu acide et non ioniques.

3. Produits selon la revendication 1 ou 2 caractérisés en ce que la dispersion aqueuse A contient 40 à 55% en poids de matière sèche constituée de copolymère styrène-butadiène présentant un rapport pondéral styrène/butadiène compris entre 50/50 et 65/35 avec un diamètre moyen de particules compris entre 0,1 et 0,2 µm.

4. Produits selon la revendication 3 caractérisés en ce que le rapport pondéral styrène/butadiène du copolymère styrène-butadiène présent dans la dispersion aqueuse A, est compris entre 54/46 et 62/38.

5. Produits selon l'une quelconque des revendications précédentes caractérisés en ce que l'»agent coagulant« est un sel alcalin d'un acide aliphatique saturé ou insaturé contenant de 8 à 18 atomes de corbone.

6. Produits selon la revendication 5, caractérisés en ce que l'»agent coagulant« est un sel alcalin d'un acide aliphatique saturé ou insaturé contenant de 12 à 18 atomes de carbone.

7. Produits selon la revendication 5 caractérisés en ce que l'»agent coagulant« est du laurate ou de l'oléate de potassium.

8. Produits selon l'une quelconque des revendications précédentes, caractérisés en ce que la cire mise en émulsion aqueuse présente un point de fusion supérieur à 50° C et inférieur à 100° C.

9

9. Produits selon l'une quelconque des revendications précédentes caractérisés en ce que l'émulsion aqueuse de cire contient de 10 à 55% en poids de matière sèche constituée de particules dont le diamètre moyen est inférieur à 1 μm.

10. Produits selon l'une quelconque des revendications précédentes caractérisés en ce que la cire est mise en émulsion aqueuse à l'aide dudit »agent coagulant« et éventuellement d'un émulsifiant anionique, non-ionique et/ou cationique.

11. Produits selon l'une quelconque des revendications précédentes caractérisés en ce que la dispersion aqueuse B est obtenue par polymérisation en présence d'agents émulsifiants anioniques et/ou non ioniques.

12. Produits selon l'une quelconque des revendications précédentes caractérisés en ce que la dispersion aqueuse B contient de 40 à 55% en poids de matière sèche constituée de copolymère butadiène-styrène présentant un rapport pondéral butadiène/styrène compris enre 20/80 et 95/5, avec un diamètre moyen de particules compris ente 0,1 et 0,3 μm.

13. Produits selon la revendication 12, caractérisés en ce que le rapport pondéral butadiène/styrène du copolymère butadiène-styrène présent dans la dispersion aqueuse B, est compris entre 35/65 et 90/10.

14. Produits selon l'une quelconque des revendications précédentes caractérisés en ce qu'ils contiennent les quantités suivantes de constituants, les quantités de chaque constituant, à l'exclusion de la cire, étant exprimées en % en poids par rapport au poids de produit de cure:

— de 30 à 99,5% de dispersion aqueuse A,
— d'au moins 0,1% d'»agent coagulant«,
— de 0 à 69,9% de dispersion aqueuse B,
— de 0 à 20% de cire, la quantité de cire étant exprimée en poids de matière sèche de cire par rapport au poids total de matière sèche de polymère contenu dans lesdits produits de cure.

15. Produits selon la revendication 14, caractérisés en ce qu'ils contiennent:

— de 45 à 85% de dispersion aqueuse A,
— de 0,3 à 0,8% d'»agent coagulant«,
— de 15 à 45% de dispersion aqueuse B
— et de 1 à 4% de cire.

16. Procédé de préparation des produits faisant l'objet de l'une quelconque des revendications précédentes, caractérisé en ce que la dispersion aqueuse A de copolymère filmogène est mélangée audit agent coagulant en solution aqueuse ou hydroalcoolique et/ou à l'émulsion aqueuse de cire et/ou à la dispersion aqueuse B.

17. Utilisation des produits de cure faisant l'objet de l'une quelconque des revendications 1 à 15 pour le traitement de bétons ou de mortiers frais.

## Pantentansprüche

1. Abziehbare Behandlungsmittel für frischen Beton und frischen Mörtel, die eine wäßrige Dispersion A eines filmbildenden Butadien-Styrol-Copolymeren enthalten, dadurch gekennzeichnet, daß

— die genannte Dispersion A durch Polymerisation eines Gemischs von Butadien und wenigstens 50 Gewichtsprozent Styrol in Abwesenheit eines Schutzkolloids, das in Gegenwart von Calciumionen und/oder bei stark alkalischem pH in Wasser unlöslich wird, in wäßriger Emulsion in saurem Milieu erhalten wird,
— daß weiterhin in den genannten Behandlungsmitteln wenigstens ein »Koagulierungsmittel« für das genannte Copolymer der Dispersion A in Gegenwart von Calciumionen vorhanden ist, wobei das genannte »Koagulierungsmittel« eingesetzt wird in Form einer wäßrigen oder wäßrig-alkoholischen Lösung und/oder über die Zwischenstufe einer wäßrigen Wachsemulsion und/oder einer wäßrigen Dispersion B eines Butadien-Styrol-Copolymeren, das wenigstens 20 Gewichtsprozent Butadien enthält, wobei die Dispersion durch Polymerisation in wäßriger Emulsion in Gegenwart des genannten »Koagulierungsmittels« erhalten wird.

2. Mittel nach Anspruch 1, dadurch gekennzeichnet, daß die wäßrige Dispersion A des synthetischen Polymers durch Polymerisation in wäßriger Emulsion in Gegenwart einer Mischung von in saurer Lösung stabilen anionischen und nichtionischen Emulgiermitteln erhalten wird.

3. Mittel nach Anspruch 1 oder 2, dadurch gekennzeichnet, daß die wäßrige Dispersion A 40 bis 55 Gewichtsprozent Trockensubstanz enthält, die aus Butadien-Styrol-Copolymer mit einem Gewichtsverhältnis Styrol/Butadien zwischen 50/50 und 65/35 mit einem mittleren Teilchendurchmesser zwischen 0,1 und 0,2 μm besteht.

4. Mittel nach Anspruch 3, dadurch gekennzeichnet, daß das Gewichtsverhältnis Styrol/Butadien des Butadien-Styrol-Copolymers in der wäßrigen Dispersion A zwischen 54/46 und 62/38 liegt.

5. Mittel nach einem der vorangehenden Ansprüche, dadurch gekennzeichnet, daß das »Koagulierungsmittel« ein Alkalisalz einer gesättigten oder ungesättigten aliphatischen Säure mit 8 bis 18 Kohlenstoffatomen ist.

6. Mittel nach Anspruch 5, dadurch gekennzeichnet, daß das »Koagulierungsmittel« ein Alkalisalz einer gesättigten oder ungesättigten aliphatischen Säure mit 12 bis 18 Kohlenstoffatomen ist.

7. Mittel nach Anspruch 5, dadurch gekennzeichnet, daß das »Koagulierungsmittel« Kaliumlaurat oder -oleat ist.

8. Mittel nach einem der vorangehenden Ansprüche, dadurch gekennzeichnet, daß das in die wäßrige Emulsion eingesetzte Wachs einen Schmelzpunkt oberhalb von 50° C und unterhalb von 100° C besitzt.

9. Mittel nach einem der vorangehenden Ansprüche, dadurch gekennzeichnet, daß die wäßrige Wachsemulsion 10 bis 55 Gewichtsprozent Trockensubstanz enthält, die aus Teilchen mit einem mittleren Durchmesser von weniger als 1 μm besteht.

10. Mittel nach einem der vorangehenden Ansprüche, dadurch gekennzeichnet, daß das Wachs mit Hilfe des genannten »Koagulierungsmittels« und gegebenenfalls eines anionischen, nichtionischen und/oder kationischen Emulgiermittels in der wäßrigen Emulsion eingesetzt wird.

11. Mittel nach einem der vorangehenden Ansprüche, dadurch gekennzeichnet, daß die wäßrige Dispersion B durch Polymerisation in Gegenwart von anionischen und/oder nichtionischen Emulgiermitteln erhalten wird.

12. Mittel nach einem der vorangehenden Ansprüche, dadurch gekennzeichnet, daß die wäßrige Dispersion B 40 bis 55 Gewichtsprozent Trockensubstanz enthält, die aus Butadien-Styrol-Copolymer mit einem Gewichtsverhältnis Butadien/Styrol zwischen 20/80 und 95/5 mit einem mittleren Teilchendurchmesser zwischen 0,1 und 0,3 μm besteht.

13. Mittel nach Anspruch 12, dadurch gekennzeichnet, daß das Gewichtsverhältnis Butadien/Styrol des Butadien-Styrol-Copolymers in der wäßrigen Dispersion B zwischen 35/65 und 90/10 liegt.

14. Mittel nach einem der vorangehenden Ansprüche, dadurch gekennzeichnet, daß sie die folgenden Mengen der Bestandteile enthalten, wobei die Menge der einzelnen Bestandteile mit Ausnahme des Wachses in Gewichtsprozent, bezogen auf das Gewicht des Behandlungsmittels, angegeben sind

— 30 bis 99,5% wäßrige Dispersion A,
— mindestens 0,1% »Koagulierungsmittel«,
— 0 bis 69,9% wäßrige Dispersion B,
— 0 bis 20% Wachs, wobei die Wachsmenge als Gewicht der Wachs-Trockensubstanz, bezogen auf das Gesamtgewicht der Trockensubstanz, des in den Behandlungsmitteln enthaltenen Polymers angegeben ist.

15. Mittel nach Anspruch 14, dadurch gekennzeichnet, daß sie enthalten:

— 45 bis 85% wäßrige Dispersion A,
— 0,3 bis 0,8% »Koagulierungsmittel«,
— 15 bis 45% wäßrige Dispersion B,
— 1 bis 4% Wachs.

16. Verfahren zur Herstellung der Mittel nach einem der vorangehenden Ansprüche, dadurch gekennzeichnet, daß die wäßrige Dispersion A des filmbildenden Copolymers mit dem Koagulierungsmittel in wäßriger oder wäßrig-alkoholischer Lösung und/oder mit der wäßrigen Wachsemulsion und/oder mit der wäßrigen Dispersion B gemischt wird.

17. Anwendung der Behandlungsmittel nach einem der Ansprüche 1 bis 15 zur Behandlung von frischem Beton oder frischem Mörtel.

## Claims

1. Cure products for fresh mortars or concretes, which can be removed by being peeled off, containing an aqueous dispersion A of a film-forming butadiene-styrene copolymer characterised in that:

—said dispersion A is produced by polymerisation in aqueous emulsion in an acid medium of a mixture of butadiene and at least 50% by weight of styrene in the absence of any protective colloid which becomes insoluble in water in the presence of calcium ions and/or with a highly alkyline pH-value, and
— also present in said cure products is at least one »coagulating agent« for said copolymer of the dispersion A in the presence of calcium ions, said coagulating agent being introduced in the form of an aqueous or hydro-alcoholic solution and/or by way of an aqueous emulsion of wax and/or an aqueous dispersion B of a butadiene-styrene copolymer containing at least 20% by weight of butadiene which is produced by polymerisation in aqueous emulsion in the presence of said »coagulating agent«.

2. Products according to claim 1 characterised in that the aqueous dispersion A of synthetic polymer is produced by polymerisation in aqueous emulsion in the presence of a mixture of non-ionic emulsifying agents and anionic emulsifying agents which are stable in an acid medium.

3. Products according to claim 1 or claim 2 characterised in that the aqueous dispersion A contains from 40 to 55% by weight of dry matter formed by styrene-butadiene copolymer having a styrene/butadiene ratio by weight of between 5/50 and 65/35 with a mean particle diameter of between 0.1 and 0.2 μm.

4. Products according to claim 3 characterised in that the styrene/butadiene ratio by weight of the styrene-butadiene copolymer present in the aqueous dispersion A is between 54/46 and 62/38.

5. Products according to any one of the preceding claims characterised in that the »coagulating agent« is an alkali metal salt of a saturated or unsaturated aliphatic acid containing from 8 to 18 carbon atoms.

6. Products according to claim 5 characterised in that the »coagulating agent« is an alkali metal salt of a saturated or unsaturated aliphatic acid containing from 12 to 18 carbon atoms.

7. Products according to claim 5 characterised in that the »coagulating agent« is potassium oleate or laurate.

8. Products according to any one of the preceding claims characterised in that the wax which is put into the form of an aqueous emulsion has a melting point of higher than 50° C and lower than 100° C.

9. Products according to any one of the preceding claims characterised in that the aqueous emulsion of wax contains from 10 to 55% by weight of dry matter formed by particles whose mean diameter is smaller than 1 μm.

10. Products according to any one of the preceding claims characterised in that the wax is put into aqueous emulsion by means of said »coagulating agent« and optionally an anionic, non-ionic and/or cationic emulsifier.

11. Products according to any one of the preceding claims characterised in that the aqueous dispersion B is produced by polymerisation in the presence of anionic and/or non-ionic emulsifying agents.

12. Products according to any one of the preceding claims characterised in that the aqueous dispersion B contains from 40 to 55% by weight of dry matter formed by butadiene-styrene having a butadiene/styrene ratio by weight of between 20/80 and 95/5, with a mean particle diameter of between 0.1 and 0.3 μm.

13. Products according to claim 12 characterised in that the butadiene/styrene ratio by weight in the butadiene-styrene copolymer present in the aqueous dispersion B is between 35/65 and 90/10.

14. Products according to any one of the preceding claims characterised in that they contain the following amounts of constituents, the amounts of each constituent, excluding the wax, being expressed in terms of percent by weight with respect to the weight of cure product:

— from 30 to 99.5% of aqueous dispersion A,
— at least 0.1% of »coagulating agent«,
— from 0 to 69.9% of aqueous dispersion B,
— from 0 to 20% of wax, the amount of wax being expressed in terms of dry matter of wax with respect to the total weight of dry matter of polymer contained in said cure products.

15. Products according to claim 14 characterised in that they contain:

— from 45 to 85% of aqueous dispersion A,
— from 0.3 to 0.8% of »coagulating agent«,
— from 15 to 45% of aqueous dispersion B and
— from 1 to 4% of wax.

16. A process for preparation of the products according to any one of the preceding claims characterised in that the aqueous dispersion A of film-forming copolymer is mixed with said coagulating agent in aqueous or hydro-alcohol solution and/or the aqueous wax emulsion and/or the aqueous dispersion B.

17. Use of the cure products according to any one of claims 1 to 15 for treating fresh mortars or concretes.